# EUROPEAN PATENT APPLICATION

(11) **EP 4 513 617 A2**
(43) Date of publication of application: **26.02.2025**
(21) Application number: 24196082.2
(22) Date of filing: 23.08.2024
(51) Int. Cl.: H01M 10/42, H01M 10/48, H01M 50/211, H01M 50/569

(54) **BATTERY MODULE, BATTERY PACK AND ELECTRICAL DEVICE**

(30) Priority: 25.08.2023 CN 202311083567
(71) Applicant: Xiamen Ampack Technology Limited, Xiamen City, Fujian Province, 361000 (CN)
(72) Inventor: WANG, Shenbo, Xiamen City, Fujian Province, People s Republic of China, 361000 (CN); LING, Xianjin, Xiamen City, Fujian Province, People s Republic of China, 361000 (CN); WU, Mingjie, Xiamen City, Fujian Province, People s Republic of China, 361000 (CN)
(74) Representative: Icosa

(57) **Abstract**

A battery module (100) includes a cell assembly (10), a testing member (30), and a first component (50). The cell assembly (10) includes a plurality of battery cells (11), each of which includes a battery cell housing (111) and electrode terminals (112). The electrode terminals (112) extend out the battery cell housing (111), and the electrode terminals (112) are located on a first side (1113) of the battery cell housing (111). The testing member (30) includes a detection portion (31), a first connecting portion (32), and a second connecting portion (33). The first connecting portion (32) is connected to the detection portion (31) and the second connecting portion (33), the detection portion (31) is disposed between the battery cell housings (111), and the second connecting portion (33) is configured to be connected to a circuit board (40). The first component (50) is provided with a first opening (50a), at least a part of the detection portion (31) is located in the first opening (50a), and the first connecting portion (32) extends out of the first opening (50a) from a second side (1114) of the battery cell housing (111).

## Description

### TECHNICAL FIELD

This application relates to the technical field of energy storage, and in particular, a battery module and a manufacturing method therefor, a battery pack and an electrical device.

### BACKGROUND

At present, battery modules are widely used in the fields of drones, electric vehicles, intelligent energy storage devices, and so on. Conventionally, a battery cell is detected through a testing member, and currently there are difficulties in assembling the testing member and the battery cell, resulting in damage to the testing member connected to the battery cell.

### SUMMARY

In view of this, it is necessary to provide a battery module and a manufacturing method therefor, a battery pack, and an electrical device, which facilitates assembly and reduces the risk of a testing member being squeezed.

An embodiment of this application provides a battery module including a cell assembly, a testing member, and a first component. The cell assembly includes a plurality of battery cells, each of which includes a battery cell housing and electrode terminals. The electrode terminals extend out the battery cell housing, and the electrode terminals are disposed on a first side of the battery cell housing. The testing member includes a detection portion, a first connecting portion, and a second connecting portion. The first connecting portion connects the detection portion and the second connecting portion, the detection portion is disposed between the battery cell housings, and the second connecting portion is configured to be connected to a circuit board. The first component is provided with a first opening, at least a part of the detection portion is disposed in the first opening, and the first connecting portion extends out of the first opening from a second side of the battery cell housing. By locating the testing member and the electrode terminals on different sides of a body portion, it is conductive to assembling the testing member, the testing member is protected by the first component, and the risk of damage due to pressure on the testing member is reduced.

Optionally, in some embodiments of this application, the first opening faces a second side of the cell assembly, which is conductive to assembling the testing member.

Optionally, in some embodiments of this application, a thickness of the testing member is less than a thickness of the first component, which reduces the risk of damage due to pressure on the testing member.

Optionally, in some embodiments of this application, the first opening penetrates through the first component along a thickness direction of the first component, which is conductive to the provision of the testing member.

Optionally, in some embodiments of this application, along a width direction of the first component, the first opening extends from a sidewall of the first component.

Optionally, in some embodiments of this application, a plurality of battery cells are stacked along a first direction, and the detection portion is located between the plurality of battery cells in the middle position, which is conductive to detecting the temperature of the battery cells.

Optionally, in some embodiments of this application, a binder is further included, and the testing member is connected to the battery cell via the binder, which is conductive to fixing the testing member.

Optionally, in some embodiments of this application, a holder is further included, at least a part of the cell assembly is disposed within the holder, the holder is provided with a second opening, the holder includes a top wall, and the top wall and the cell assembly are arranged along the first direction. Along the first direction, a part of the second opening penetrates through the top wall. The portion of the first connecting portion is exposed to the second opening. The portion of the second opening may provide a space for movement of the testing member, thereby reducing the risk of damage to the testing member.

Optionally, in some embodiments of this application, the holder includes a front wall, the front wall is connected to the top wall, and the front wall and the cell assembly are arranged along a second direction. Along the second direction, a part of the second opening penetrates through the front wall. The portion of the first connecting portion is exposed to the second opening. The first direction is perpendicular to the second direction. The portion of the second opening may provide a space for movement of the testing member, thereby reducing the risk of damage to the testing member.

Optionally, in some embodiments of this application, the first connecting portion includes a first segment, a second segment, a third segment, and a bent segment. The first segment is connected to the detection portion, the first segment is connected to the third segment, the third segment is connected to the second segment, and the second connecting portion is connected to the second segment. At least a part of the first segment is disposed between two adjacent battery cell housings. The second segment and the first segment are spaced apart along the first direction. Along the second direction, the third segment is exposed to the first opening. The third segment is connected to the first segment and the second segment with the bent segment.

Optionally, in some embodiments of this application, a part of the bent segment is exposed to the second opening. The second opening may provide more space for bending deformation of the bent segment, which is further conductive to lowering stress pull on the bent segment, which in turn further reduces the risk of damage to the testing member.

Optionally, in some embodiments of this application, in a case where the first component is subjected to the expansion pressure of the battery cells, the first component is configured to have a constant thickness in the first direction, which is conductive to protecting the testing member.

Optionally, in some embodiments of this application, a second fixing portion is further included, the front wall is provided with a third concave portion, the second fixing portion is disposed in the third concave portion, and a part of the third segment is located between the battery cell housing and the second fixing portion.

Optionally, in some embodiments of this application, a resilient member is further included, the resilient member is disposed in the second opening, along the second direction, the resilient member is located between the second fixing portion and the first connecting portion, and the resilient member connects the second fixing portion and the first connecting portion. By the resilient member being disposed in a gap between the second fixing portion and the third segment, the second fixing portion is made to act on the third segment through the resilient member, which is conductive to fixing the position of the testing member.

Optionally, in some embodiments of this application, the testing member includes a temperature sensor.

Optionally, in some embodiments of this application, the cell assembly further includes a buffer member, and the buffer member has a resilience coefficient greater than a resilience coefficient of the first component. Here, the buffer member is connected to the cell assembly; and/or, the buffer member is disposed between two adjacent battery cells, which is conductive to reducing the risk of damage to the testing member.

Optionally, in some embodiments of this application, along a third direction, guiding portions are disposed on two sides of the first component, which is conductive to the insertion of the testing member into the first opening.

Optionally, in some embodiments of this application, the holder includes a first holder and a second holder, the first holder is connected to the second holder to form an accommodation space, and the first opening penetrates through the first holder.

Optionally, in some embodiments of this application, a first concave portion is disposed on a side of the top wall, the side being oriented back away from the cell assembly, a part of the testing member is disposed in the first concave portion, and a depth of the first concave portion is greater than or equal to a thickness of the testing member along the first direction, which can reduce the space occupied by the testing member in the first direction.

Optionally, in some embodiments of this application, a first fixing portion is also included, the top wall is provided with a second concave portion, the first fixing portion is disposed in the second concave portion, and the testing member is located between the top wall and the first fixing portion, which is conductive to fixing the second segment, so as to reduce the upwarping of the second segment and reduce the risk of friction damage of the second segment.

Optionally, in some embodiments of this application, a depth of the second concave portion is greater than a thickness of the first fixing portion along the first direction, which can reduce the space occupied by the first fixing portion in the first direction.

Optionally, in some embodiments of this application, a second fixing portion is further included, the front wall is provided with a third concave portion, the second fixing portion is disposed in the third concave portion, and a part of the testing member is located between the battery cell housing and the second fixing portion, which is conductive to fixing the portion of the first bent segment, reducing the deformation of the first bent segment, and lowering the risk of friction damage of the first bent segment.

Optionally, in some embodiments of this application, along the second direction, a depth of the third concave portion is greater than a thickness of the second fixing portion, which can reduce the space occupied by the second fixing portion in the second direction.

An embodiment of this application provides a manufacturing method for the battery module in any of the above embodiments, including the following steps: placing a first component between two adjacent battery cells and stacking a plurality of battery cells; and inserting an end of a testing member into a first opening from a second side.

An embodiment of this application provides a battery pack, including the battery module in any of the above embodiments. The battery pack further includes a circuit board, the circuit board is disposed on a side of a top wall, the side being oriented back away from the cell assembly, and the second connecting portion is connected to the circuit board.

An embodiment of this application provides an electrical device, including the battery pack in any of the above embodiments.

### BRIEF DESCRIPTION OF DRAWINGS

FIG. 1 illustrates a partial schematic structural diagram of a battery pack in some embodiments;
FIG. 2 illustrates a schematic exploded view of a part of the battery pack of FIG. 1;
FIG. 3 illustrates a schematic diagram of a battery cell in some embodiments;
FIG. 4 illustrates a partial schematic structural diagram of a holder in some embodiments;
FIG. 5 illustrates a schematic diagram of a battery module in some embodiments;
FIG. 6 illustrates a partial schematic structural diagram of a battery pack in some embodiments;
FIG. 7 illustrates a cross-sectional schematic view of FIG. 1 along the direction II-II;
FIG. 8 illustrates an enlarged schematic diagram of a partial structure of the battery module in FIG. 7;
FIG. 9 illustrates a schematic diagram of a battery pack from another view in some embodiments;
FIG. 10 illustrates a schematic view of a battery pack from yet another view in some embodiments;
FIG. 11 illustrates a schematic view of a battery pack from a further view in some embodiments;
FIG. 12 illustrates a schematic exploded view of a partial structure of a battery module in some embodiments;
FIG. 13 illustrates a partial schematic structural diagram of a battery pack in some embodiments;
FIG. 14 illustrates a partial schematic structural diagram of a battery pack in some embodiments;
FIG. 15 illustrates a schematic structural diagram of a battery cell, a first component, and a testing member in some embodiments;
FIG. 16 illustrates a cross-sectional schematic view of FIG. 1 along the direction III-III;
FIG. 17 illustrates an enlarged schematic diagram of a partial structure of the battery pack in FIG. 16;
FIG. 18 illustrates a schematic flow diagram of a manufacturing method for a battery module in some embodiments;
FIG. 19 illustrates a schematic structural diagram of a battery pack in some embodiments; and
FIG. 20 illustrates a schematic structural diagram of an electrical device in some embodiments.

### REFERENCE NUMERAL DESCRIPTION OF MAIN COMPONENTS

| | |
|---|---|
| Battery module | 100 |
| Cell assembly | 10 |
| Battery cell | 11 |
| Battery cell housing | 111 |
| Body portion | 111a |
| First sealing portion | 1112 |
| First side | 1113 |
| Second side | 1114 |
| Second sealing portion | 1115 |
| Sealing portion | 111b |
| Electrode terminal | 112 |
| Second component | 101 |
| Conductive plate | 102 |
| First fixing portion | 103 |
| Second fixing portion | 104 |
| Resilient member | 105 |
| Holder | 20 |
| First holder | 201 |
| Second holder | 202 |
| Second opening | 20a |
| Top wall | 21 |
| Arc portion | 21a |
| First concave portion | 211 |
| Second concave portion | 212 |
| Fourth concave portion | 213 |
| Front wall | 22 |
| Third concave portion | 221 |
| Rear wall | 23 |
| Right wall | 24 |
| Left wall | 25 |
| Bottom wall | 26 |
| Fifth concave portion | 261 |
| Testing member | 30 |
| Detection portion | 31 |
| First connecting portion | 32 |
| First segment | 321 |
| Second segment | 322 |
| Third segment | 323 |
| Bent segment | 324 |
| Fourth segment | 325 |
| First bent segment | 324a |
| Second bent segment | 324b |
| Third bent segment | 324c |
| Fourth bent segment | 324d |
| Circuit board | 40 |
| First component | 50 |
| First opening | 50a |
| Guiding portion | 511 |
| Binder | 60 |
| Buffer member | 70 |
| Connector | 80 |
| Shell | 90 |
| Battery pack | 200 |
| Electrical device | 300 |
| First direction | X |
| Second direction | Y |
| Third direction | Z |

This application is further described below with reference to some following specific embodiments and the foregoing drawings.

### DETAILED DESCRIPTION OF EMBODIMENTS

The following describes the technical solutions in some embodiments of this application with reference to the drawings hereto. Evidently, some described embodiments are merely a part of but not all of the embodiments of this application.

It is hereby noted that when one element is referred to as being "connected" to another element, it may be directly connected to the another element or there may also be an element provided therebetween. When one element is referred to as being "provided" or "disposed" on another element, it may be directly disposed on the another element or there may also be an element provided therebetween.

Unless otherwise defined, all technical and scientific terms used in the description shall have the same meanings as commonly understood by a person skilled in the technical field to which this application belongs. The terms used in the description of this application are merely intended to describe some specific embodiments rather than to limit this application. The term "and/or" used in the description includes any and all combinations of one or more of the relevant listed items.

It should be understood that the term "perpendicular" is used in the technical solutions of this application to describe the ideal state between two components, taking into account the actual machining tolerances. In the actual state of production or use, one component may be approximately perpendicular to another component. For example, numerically, the term "perpendicular" may represent an angle of 90°±10° between two straight lines, or a dihedral angle of 90°±10° between two planes, or an angle of 90°±10° between a straight line and a plane. The two components described as "perpendicular" may not absolutely be straight lines or planes, but may also roughly be straight lines or planes. From a macroscopic point of view, components with the overall extension direction being straight lines or planes may be regarded as "straight lines" or "planes".

Unless otherwise defined, all technical and scientific terms used herein have the same meanings as commonly understood by a person skilled in the technical field to which this application belongs. The terms used in the description of this application are merely intended to describe some specific embodiments but not to limit this application.

The terms "left", "right", "top", "bottom", "front", "back", and other similar expressions used herein are merely for ease of description and are not intended to limit this application.

Unless otherwise defined, the term "plurality" herein, when used to describe the number of components, specifically means that the number of such components is two or more.

In the first direction X includes along the first direction X and along a direction opposite to the first direction X, in the second direction Y includes along the second direction Y and along a direction opposite to the second direction Y, and in the third direction Z includes along the third direction Z and along a direction opposite to the third direction Z.

An embodiment of this application provides a battery module including a cell assembly, a testing member, and a first component. The cell assembly includes a plurality of battery cells, each of which includes a battery cell housing and electrode terminals. The electrode terminals extend out the battery cell housing, and the electrode terminals are located on a first side of the battery cell housing. The testing member includes a detection portion, a first connecting portion, and a second connecting portion. The first connecting portion is connected to the detection portion and the second connecting portion, the detection portion is disposed between the battery cell housings, and the second connecting portion is configured to be connected to a circuit board. The first component is provided with a first opening, at least a part of the detection portion is located in the first opening, and the first connecting portion extends out of the first opening from a second side of the battery cell housing. By locating the testing member and the electrode terminals on different sides of a body portion, it is conductive to assembling the testing member, and the testing member is protected by the first component, so that the risk of damage due to pressure on the testing member is reduced.

Some implementations of this application are described in detail below in conjunction with the accompanying drawings. The following implementations and features in the implementations may be combined with each other without conflict.

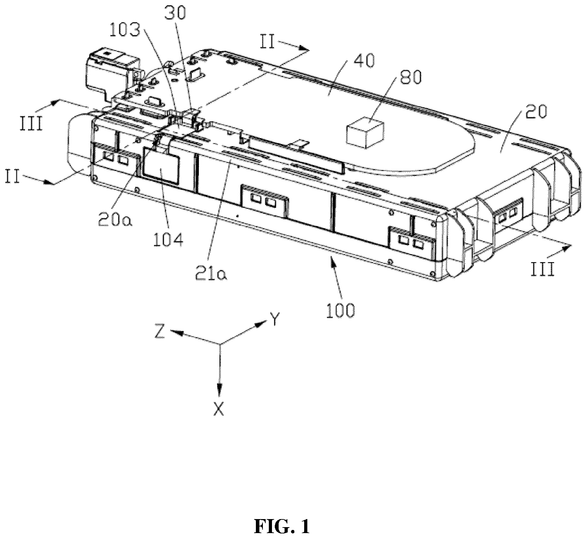

Referring to FIGS. 1 to 3, an embodiment of this application provides a battery module 100 including a cell assembly 10 and a testing member 30, the cell assembly 10 includes a battery cell 11, and the testing member 30 is configured to detect a signal from the battery cell 11.

In some embodiments, the testing member 30 is configured to detect a temperature of the battery cell 11. Optionally, the testing member 30 is configured to detect at least one of current, voltage, resistance, and moisture outside the battery cell housing 111, electrolyte solution outside the battery cell housing 111, and other information of the battery cell 11. This application is described with an example of the testing member 30 detecting the temperature of the battery cell 11.

In some embodiments, the cell assembly 10 includes a plurality of battery cells 11, one end of the testing member 30 is connected to the battery cells 11, and another end of the testing member 30 is configured to be connected to a circuit board 40.

In some embodiments, one end of the testing member 30 is disposed between adjacent battery cells 11; or, one end of the testing member 30 is disposed in a first direction X with the cell assembly 10.

In some embodiments, each battery cell 11 includes a battery cell housing 111, and the testing member 30 is connected to at least one of the battery cell housings 111.

In some embodiments, the cell assembly 10 includes a plurality of battery cells 11 are stacked in the first direction X.

In some embodiments, the testing member 30 is connected to the battery cell housing 111 of the outermost battery cell 11.

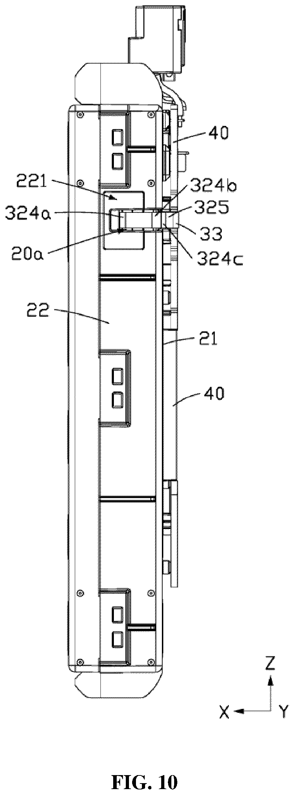

Referring to FIG. 10, in some embodiments, the testing member 30 is disposed between adjacent battery cell housings 111, which is conductive to detecting the temperature of the battery cells 11.

Referring to FIG. 10, in some embodiments, along the first direction X, the testing member 30 is disposed between two adjacent battery cell housings 111 in a middle position of the plurality of battery cells 11. The temperature of the battery cells 11 in the middle position is typically higher than the temperature of the battery cells 11 in the outer side, which is further conductive to detecting the temperature of the battery cells 11.

Referring to FIGS. 1 to 3, in some embodiments, each battery cell 11 includes an electrode assembly (not illustrated), the electrode assembly being disposed within a body portion 111a. The electrode assembly includes a coiled structure formed by stacking and winding a first electrode plate, a separator, and a second electrode plate. In other embodiments, the electrode assembly may also be a laminated structure with the first electrode plate and the second electrode plate having opposite polarities. Optionally, the battery cell 11 includes a pouch battery cell. Optionally, the battery cell 11 includes a prismatic cell. Optionally, the battery cell 11 includes a cylindrical cell.

In some embodiments, each battery cell 11 includes electrode terminals 112, and the electrode terminals 112 are connected to the electrode assembly and extend out the battery cell housing 111.

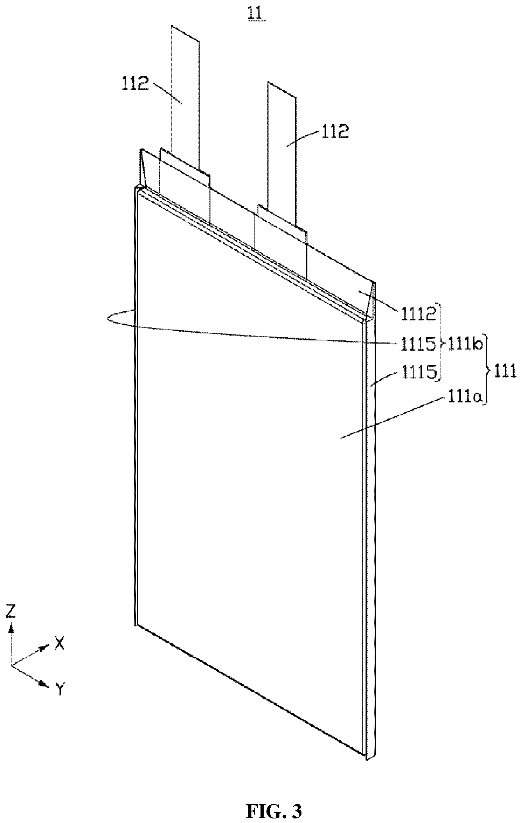

In some embodiments, referring to FIG. 3 for a three-dimensional view of the battery cell 11 in which the electrode terminals 112 are unbent. Each battery cell housing 111 includes a body portion 111a and a sealing portion 111b, and the sealing portion 111b is connected to the body portion 111a. The sealing portion 111b includes a first sealing portion 1112, and the electrode terminals 112 extend out the first sealing portion 1112.

In some embodiments, the sealing portion 111b includes two second sealing portions 1115, the two second sealing portions 1115 are located on two opposite sides of the body portion 111a, and the second sealing portions 1115 are connected to the body portion 111a.

Referring to FIGS. 1 to 5, in some embodiments, the battery module 100 includes a holder 20, the holder 20 is provided with a second opening 20a, and the second opening 20a penetrates through the holder 20. At least a part of the cell assembly 10 is disposed within the holder 20.

In some embodiments, a part of the testing member 30 is exposed within the second opening 20a. In a case where the battery module 100 is subjected to an external force or an expansion of the battery cells, for example, by exposing a portion of the testing member 30 within the second opening 20a, the second opening 20a may provide a space for movement of the testing member 30, reducing the risk of damage to the testing member 30.

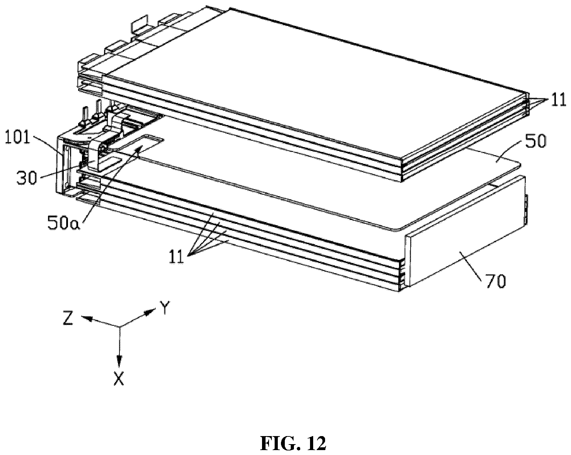

Referring to FIGS. 1 to 5 and FIG. 12, in some embodiments, the holder 20 includes a top wall 21, and the top wall 21 and the cell assembly 10 are arranged along the first direction X. A part of the second opening 20a penetrates through the second opening 20a. Along the first direction X, a part of the testing member 30 is exposed to the second opening 20a. The part of the second opening 20a may provide a space for movement of the testing member 30, reducing the risk of damage to the testing member 30.

In some embodiments, the holder 20 includes a front wall 22, and the front wall 22 is connected to the top wall 21. The front wall 22 and the cell assembly 10 are arranged along a second direction Y. A part of the second opening 20a penetrates through the front wall 22. Along the second direction Y, a part of the testing member 30 is exposed to the second opening 20a. The portion of the second opening 20a may provide a space for movement of the testing member 30, reducing the risk of damage to the testing member 30.

Referring to FIG. 10, in some embodiments, along the second direction Y, the second opening 20a is opposite to at least one of the body portions 111a.

Referring to FIGS. 1 to 5 and FIG. 12, in some embodiments, the holder 20 includes a rear wall 23, the rear wall 23 is connected to the top wall 21, and the front wall 22 and the rear wall 23 are arranged along the second direction Y.

In some embodiments, the second opening 20a may be disposed at the top wall 21 and the rear wall 23. A part of the second opening 20a penetrates through the top wall 21, and along the first direction X, a part of the testing member 30 is exposed to the second opening 20a. A part of the second opening 20a penetrates through the rear wall 23. Along a direction opposite to the second direction Y, a part of the testing member 30 is exposed to the second opening 20a.

In some embodiments, the holder 20 includes a right wall 24, and the right wall 24 is connected to the top wall 21, the front wall 22, and the rear wall 23.

In some embodiments, the second opening 20a may also be disposed at the top wall 21 and the right wall 24. A part of the second opening 20a penetrates through the top wall 21, and along the first direction X, a part of the testing member 30 is exposed to the second opening 20a. A part of the second opening 20a penetrates through the right wall 24, and along a third direction Z, a part of the testing member 30 is exposed to the second opening 20a.

It is understood that the positions of the second opening 20a and the testing member 30 can be adjusted according to actual needs.

In some embodiments, the holder 20 includes a left wall 25, and the right wall 24 and the left wall 25 are arranged along the third direction Z. The left wall 25 is connected to the top wall 21, the front wall 22, and the rear wall 23.

In some embodiments, the holder 20 includes a bottom wall 26, and the top wall 21 and the bottom wall 26 are arranged along the first direction X. The bottom wall 26 is connected to the front wall 22, the rear wall 23, the right wall 24, and the left wall 25, and the top wall 21 is connected to the front wall 22, the rear wall 23, the right wall 24, and the left wall 25 to form an accommodation space.

In some embodiments, the top wall 21 includes an arc portion 21a, the arc portion 21a is connected to the front wall 22, and the second opening 20a penetrates through the arc portion 21a.

In some embodiments, the arc portion 21a is connected to at least one of the rear wall 23, the right wall 24, and the left wall 25.

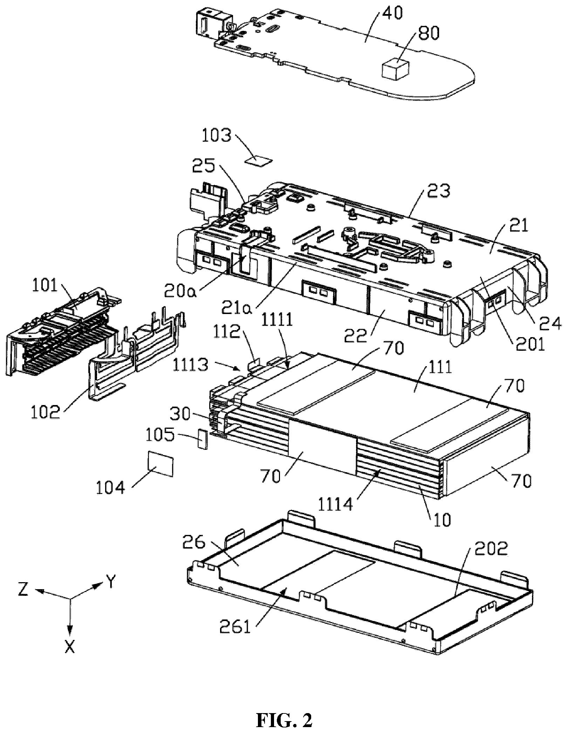

Referring to FIG. 2, in some embodiments, the holder 20 includes a first holder 201 and a second holder 202, the first holder 201 is connected to the second holder 202 to form the above-described accommodation space, and the second opening 20a penetrates through the first holder 201, which facilitates assembly. In another embodiment, the first holder 201 is provided as a one-piece injection molding.

In some embodiments, a plurality of second openings 20a and testing members 30 may be provided, and the number of the second openings 20a is the same as the number of the testing members 30.

In some embodiments, when a plurality of second openings 20a and a plurality of testing members 30 are provided, a plurality of first openings 50a are provided. Optionally, the number of the first openings 50a is the same as the number of the second openings 20a.

In some embodiments, when the holder 20 is provided with a plurality of second openings 20a, the plurality of second openings 20a may be located on the same side of the cell assembly 10 or may be provided on different sides of the cell assembly 10, each of the testing members 30 is connected to the battery cell housing 111, and a part of each of the testing members 30 is exposed to one of the second openings 20a.

In some embodiments, the plurality of testing members 30 may detect different electrical signals from the battery cells 11.

In some embodiments, the plurality of testing members 30 may detect the same signal from the battery cells 11.

In some embodiments, the plurality of testing members 30 may be connected to different locations of the battery cell housing 111.

Two second openings 20a being provided on different sides of the battery cell housing 111 is taken as an example. In some embodiments, the holder 20 is provided with two second openings 20a, and the battery module 100 includes two testing members 30. One of the second openings 20a penetrates through the top wall 21 and the front wall 22, and a part of one of the testing members 30 is exposed to the second opening 20a. The other second opening 20a penetrates through the top wall 21 and the rear wall 23, and a part of the other testing member 30 is exposed to the second opening 20a.

Optionally, by the two testing members 30, different electrical signals from the battery cells 11 can be detected. For example, one of the testing members 30 detects the temperature of the battery cells 11 and the other testing member 30 detects the current of the battery cells 11.

Optionally, the two testing members 30 may also detect the same electrical signal from the battery cells 11. For example, both the testing members 30 detect the temperature of the battery cells 11, which facilitates the comparison of the two detected temperatures, and is conductive to improving the accuracy of the detection.

Optionally, the two testing members 30 may also be provided at different locations of the battery cell housing 111, and may detect temperatures at different locations of the battery cell housing 111.

**It** is understood that the number of second openings 20a and testing members 30 may be adjusted according to actual needs.

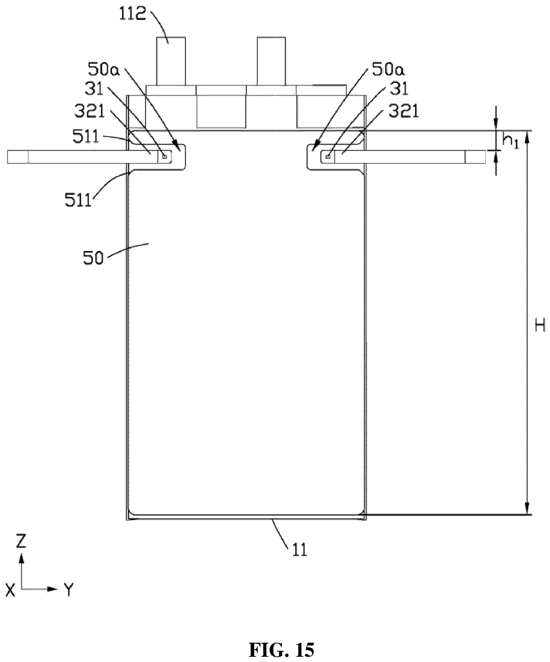

Referring to FIG. 15, in some embodiments, along the third direction Z, the distance h1 between the testing member 30 and the body portion 111a is less than half of the length H of the body portion 111a. The closer the testing member 30 is to the electrode terminal 112, the higher the detected temperature of the battery cell 11, which in turn is further conductive to detecting the temperature of the battery cell 11.

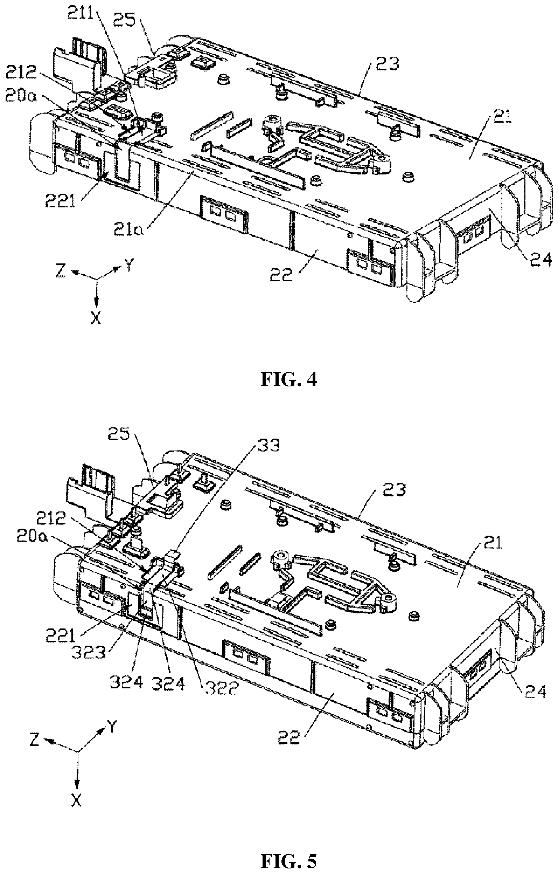

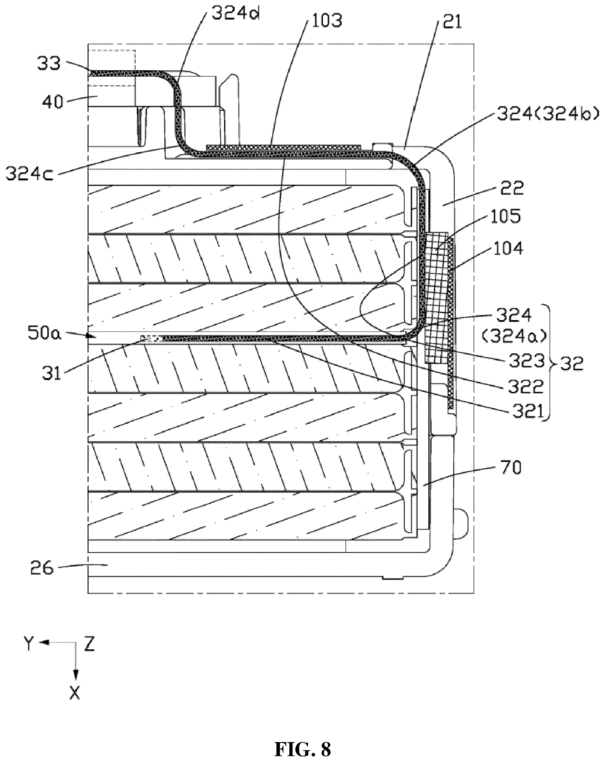

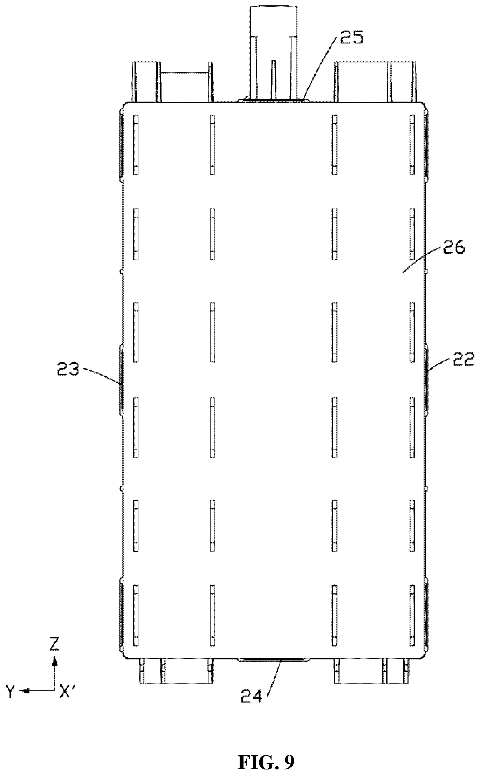

Referring to FIGS. 5 to 11, this application is described with an example of the second opening 20a being disposed in the top wall 21 and in the front wall 22. In some embodiments, one end of the testing member 30 includes a detection portion 31. Optionally, the detection portion 31 is a temperature sensor.

In some embodiments, the detection portion 31 is disposed between two adjacent battery cell housings 111.

In some embodiments, the testing member 30 includes a first connecting portion 32, and the first connecting portion 32 is connected to the detection portion 31. The first connecting portion 32 extends out of the holder 20 from the second opening 20a.

In some embodiments, another end of the testing member 30 includes a second connecting portion 33, the second connecting portion 33 is connected to the first connecting portion 32, and the second connecting portion 33 is configured to be connected to the circuit board 40.

In some embodiments, along a direction opposite to the first direction X, the second connecting portion 33 is disposed on a side of the holder 20 , the side of the holder 20 being a side facing away from the cell assembly 10. Specifically, the second connecting portion 33 is disposed on a side of the top wall 21, the side of the top wall 21 being a side facing away from the cell assembly 10 and connected to the circuit board 40, which may transmit electrical signals to the circuit board 40. Optionally, the second connecting portion 33 is soldered to the circuit board 40.

In some embodiments, the testing member 30 is substantially U-shaped.

In some embodiments, the first connecting portion 32 includes a first segment 321, the first segment 321 is connected to the detection portion 31, and at least a part of the first segment 321 is disposed between two adjacent battery cell housings 111. Optionally, along the first direction X, a projection of the first segment 321 is disposed within a projection of the battery cell housing 111. Optionally, a part of the first segment 321 extends out of the battery cell housing 111.

In some embodiments, the detection portion 31 and the first segment 321 are disposed in the first opening 50a. Along the first direction X, a thickness of the detection portion 31 is less than a thickness of the first component 50, and a thickness of the first segment 321 is less than the thickness of the first component 50.

In some embodiments, the first connecting portion 32 includes a second segment 322, the second segment 322 is disposed at the top wall 21, and the second segment 322 and the first segment 321 are spaced apart along the first direction X.

In some embodiments, the first connecting portion 32 includes a third segment 323, and along the second direction Y, the second segment 322 is disposed on the outer side of the cell assembly 10.

In some embodiments, the first connecting portion 32 includes a bent segment 324. By providing the bent segment 324, the bent segment 324 can reduce stress pull when the testing member 30 is squeezed and moved, further reducing the risk of damage to the testing member 30 due to the testing member 30 being squeezed.

In some embodiments, a part of the bent segment 324 is exposed to the second opening 20a.

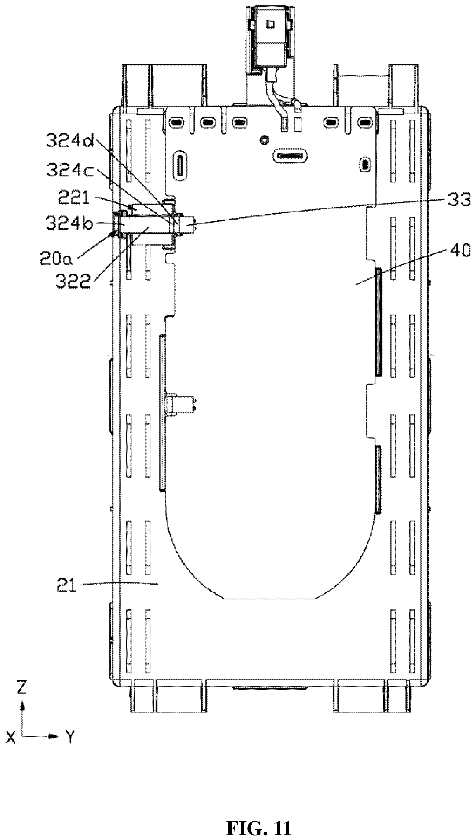

In some embodiments, as shown in FIG. 11, along the first direction X, a part of the bent segment 324 is exposed to the second opening 20a, and the second opening 20a may provide more space for bending deformation of the bent segment 324, which is conductive to reducing stress pull on the bent segment 324, and thus reducing the risk of damage to the testing member 30.

In some embodiments, as shown in FIG. 10, along the second direction Y, a part of the bent segment 324 is exposed to the second opening 20a, and the second opening 20a may provide more space for bending deformation of the bent segment 324, which is further conductive to reducing stress pull on the bent segment 324, and thus further reducing the risk of damage to the testing member 30.

In some embodiments, the third segment 323 is connected to the first segment 321 and the second segment 322 via the bent segment 324.

In some embodiments, the bent segment 324 includes a first bent segment 324a, and the first bent segment 324a is connected to the first segment 321 and the third segment 323.

In some embodiments, along the second direction Y, a part of the first bent segment 324a is exposed to the second opening 20a.

In some embodiments, the bent segment 324 includes a second bent segment 324b, and the second bent segment 324b is connected to the second segment 322 and the third segment 323.

In some embodiments, along the first direction X, a part of the second bent segment 324b is exposed to the second opening 20a.

In some embodiments, along the second direction Y, a part of the second bent segment 324b is exposed to the second opening 20a.

In some embodiments, the first connecting portion 32 includes a fourth segment 325, and the fourth segment 325 is connected to the second segment 322 and the second connecting portion 33.

In some embodiments, the bent segment 324 further includes a third bent segment 324c and a fourth bent segment 324d, and the third bent segment 324c is connected to the second segment 322 and the fourth segment 325. The fourth bent segment 324d is connected to the fourth segment 325 and the second connecting portion 33, which is conductive to reducing stress pull on the testing member 30, and reducing the risk of damage to the testing member 30.

Referring to FIGS. 1 to 6, in some embodiments, the top wall 21 has a first concave portion 211 on a side of the top wall 21, the side being orientedback away from the cell assembly 10, and a portion of the testing member 30 is provided in the first concave portion 211. Along the first direction X, the depth of the first concave portion 211 is greater than the thickness of the testing member 30, which can reduce the space occupied by the testing member 30 in the first direction X.

In some embodiments, at least a portion of the second segment 322 is disposed in the first concave portion 211. Along the first direction X, the depth of the first concave portion 211 is greater than the thickness of the second segment 322.

In some embodiments, the battery module 100 includes a first fixing portion 103, a second concave portion 212 is provided on a side of the top wall 21, the side being oriented back away from the cell assembly 10, the first fixing portion 103 is disposed in the second concave portion 212, and the second segment 322 is located between the first fixing portion 103 and the top wall 21, which is conductive to fixing the second segment 322, so as to reduce the upwarping of the second segment 322 and reduce the risk of friction damage to the second segment 322.

In some embodiments, along the first direction X, the depth of the second concave portion 212 is greater than the thickness of the first fixing portion 103, which can reduce the space occupied by the first fixing portion 103 in the first direction X.

In some embodiments, the first fixing portion 103 is bonded to the second concave portion 212. For example, the first fixing portion 103 is bonded to the second concave portion 212 by an adhesive.

In some embodiments, the first fixing portion 103 is insulating. Optionally, the first fixing portion 103 includes foam and an adhesive, and the foam is bonded to the second concave portion and the second segment 322 by the adhesive. Optionally, the first fixing portion 103 includes a polycarbonate (PC) sheet.

In some embodiments, the battery module 100 includes a second fixing portion 104, the front wall 22 has a third concave portion 221, and the second opening 20a communicates with the third concave portion 221. The second fixing portion 104 is disposed in the third concave portion 221, and a part of the first bent segment 324a is located between the second fixing portion 104 and the battery cell housing 111, which is conductive to fixing the portion of the first bent segment 324a, so as to reduce the deformation of the first bent segment 324a, and reduce the risk of friction damage to the first bent segment 324a.

In some embodiments, along the second direction Y, the depth of the third concave portion 221 is greater than the thickness of the second fixing portion 104, which can reduce the space occupied by the second fixing portion 104 in the second direction Y.

In some embodiments, the second fixing portion 104 is bonded to the third concave portion 221.

In some embodiments, the second fixing portion 104 is insulating. Optionally, the second fixing portion 104 includes foam and an adhesive, and the foam is bonded to the third concave portion 221 by the adhesive. Optionally, the second fixing portion 104 includes a polycarbonate (PC) sheet.

In some embodiments, the battery module 100 includes a resilient member 105, and the resilient member 105 is insulating. The resilient member 105 is disposed within the second opening 20a. Along the second direction Y, the resilient member 105 is located between the second fixing portion 104 and the testing member 30, and the resilient member 105 is connected to the second fixing portion 104 and the testing member 30. Optionally, the resilient member 105 is located between the second fixing portion 104 and the third segment 323. The resilient member 105 is disposed in the gap between the second fixing portion 104 and the third segment 323, so that the second fixing portion 104 acts on the third segment 323 through the resilient member 105, which is conductive to fixing the position of the testing member 30. Optionally, the resilient member 105 includes foam.

In some embodiments, along the second direction Y, the distance between the second fixing portion 104 and the third segment 323 is less than the thickness of the resilient member 105, so that the resilient member 105 disposed between the second fixing portion 104 and the third segment 323 is in a compressed state, which is more conductive to fixing the position of the testing member 30.

In some embodiments, the resilience coefficient of the resilient member 105 is less than the resilience coefficient of the second fixing portion 104, thereby enhancing the protection for the testing member 30.

In some embodiments, the second fixing portion 104 and the resilient member 105 are provided as a one-piece molding, which facilitates assembly.

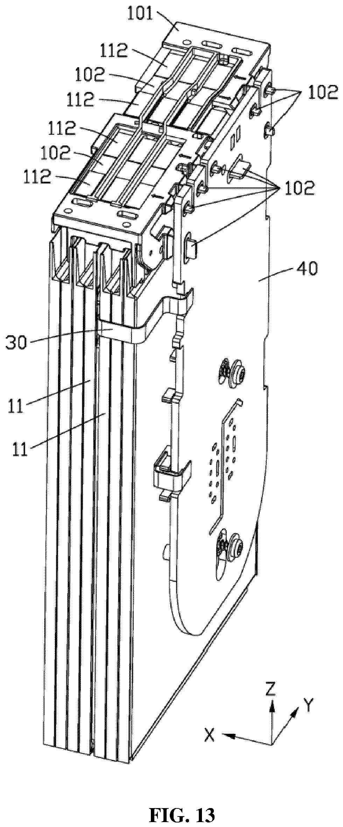

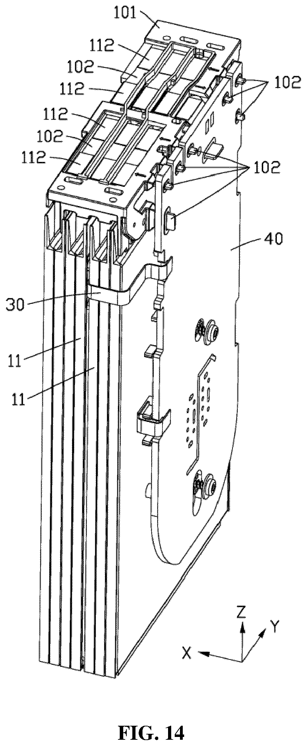

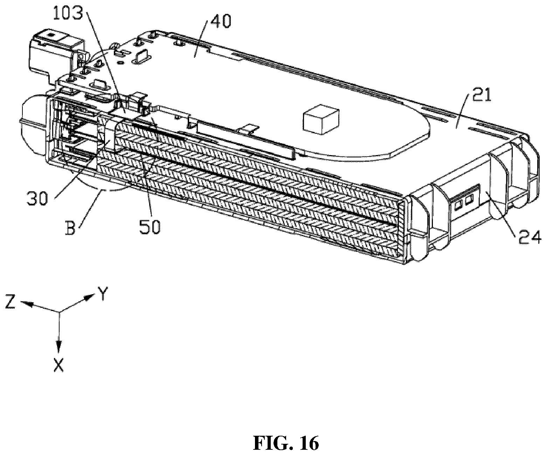

Referring to FIGS. 2, 8, and 12 to 17, in some embodiments, the battery module 100 includes a first component 50, the first component 50 is disposed between two adjacent cell housings 111, the first component 50 has a first opening 50a, and a part of the testing member 30 is disposed in the first opening 50a, thereby reducing the risk of damage due to pressure on the testing member 30. The electrode terminals 112 are located at a first side 1113 of the battery cell housing 111, and a part of the testing member 30 extends out of the first opening 50a from a second side 1114 of the battery cell housing 111. The first side 1113 and the second side 1114 are different sides of the battery cell housing 111. By locating the testing member 30 and the electrode terminals 112 on different sides of the body portion 111a, it is conductive to assembling the testing member 30.

In some embodiments, the second side 1114 is not limited to the orientation shown in FIG. 2, as long as the second side 1114 is on a different side from the first side 1113.

In some embodiments, the first opening 50a faces the second side 1114 of the cell assembly 10.

In some embodiments, along the first direction X, the thickness of the testing member 30 is less than the thickness of the first component 50. The testing member 30 is protected by the first component 50, thereby reducing the risk of damage due to pressure on the testing member 30.

In some embodiments, along the first direction X, the first opening 50a penetrates through the first component 50.

In some embodiments, the first opening 50a is concavely disposed in a surface of the first component 50, and along the first direction X, the thickness of the testing member 30 is less than the depth of the first opening 50a.

In some embodiments, along the width direction of the first component 50, the first opening 50a extends from a sidewall of the first component 50. A part of the testing member 30 is configured to be disposed in the first opening 50a along the second direction Y, which facilitates assembly of the testing member 30. Here, the second direction Y is the width direction of the first component 50.

**In** some embodiments, along the width direction of the first component 50, the first opening 50a penetrates through one of the sidewalls of the first component 50.

In some embodiments, along the third direction Z, guiding portions 511 disposed on both sides of the first component 50, which facilitates the insertion of the testing member 30 into the first opening 50a.

In some embodiments, in a case where the battery cell 11 is used in a safe range, the first component 50 is configured to have a constant thickness in the first direction X when the first component 50 is subjected to the expansion pressure of the battery cell 11, which is conductive to protecting the testing member 30. Optionally, the first component 50 includes an insulating sheet. Optionally, the first component 50 includes a polycarbonate (PC) sheet. Here, being used in a safe range means not exceeding the rated voltage and current of the battery module 100.

**In** some embodiments, the battery module 100 includes a binder 60. At least a part of the binder 60 is disposed in the first opening 50a. The binder 60 is connected to the testing member 30, and the binder 60 is connected to at least one of the adjacent battery cell housings 111.

In some embodiments, the thermal conductivity of the binder 60 is greater than the thermal conductivity of the battery cell housing 111, which is conductive to conducting heat to the testing member 30, and enhancing the accuracy of the detection. Optionally, the binder 60 includes a thermally conductive adhesive.

In some embodiments, the binder 60 is applied to the first segment 321 of the testing member 30 and inserted into the first opening 50a.

In some embodiments, the testing member 30 and the battery cell housing 111 are connected in contact.

In some embodiments, the battery module 100 includes a buffer member 70 to provide an expansion space as well as pressure for the battery cell 11. Optionally, the buffer member 70 includes foam.

In some embodiments, the resilience coefficient of the buffer member 70 is greater than the resilience coefficient of the first component 50, which is conductive to reducing the risk of damage to the testing member 30.

In some embodiments, the buffer member 70 is disposed between adjacent battery cells 11.

In some embodiments, the buffer member 70 and the first component 50 are arranged in the first direction X. Optionally, the buffer member 70 and the first component 50 are aligned along the first direction X. Optionally, the first component 50 and the buffer member 70 are arranged along the first direction X.

Referring to FIG. 2, in some embodiments, the buffer member 70 is disposed between the battery cell housing 111 and the holder 20 to further provide an expansion space as well as pressure for the battery cell 11.

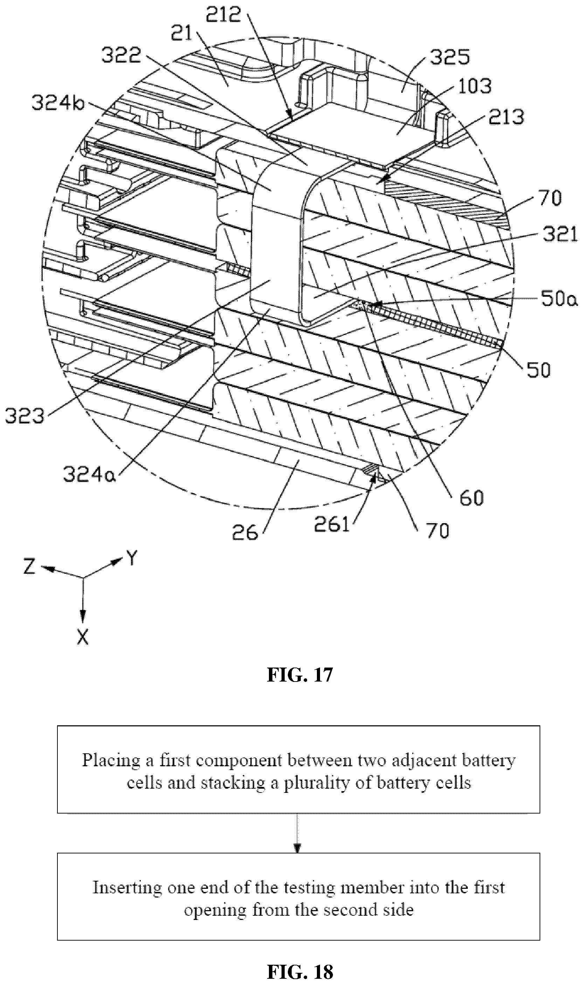

Referring to FIG. 17, in some embodiments, the top wall 21 has a fourth concave portion 213, a part of the buffer member 70 is disposed in the fourth concave portion 213, and the buffer member 70 is disposed between the battery cell housing 111 and the top wall 21, which is conductive to reducing the thickness of the battery module 100 in the first direction X, and reducing the occupied space.

In some embodiments, along the first direction X, the thickness of the buffer member 70 after being compressed is not less than the depth of the fourth concave portion 213.

In some embodiments, the bottom wall 26 has a fifth concave portion 261, the buffer member 70 is disposed in the fifth concave portion 261, and the buffer member 70 is located between the battery cell housing 111 and the bottom wall 26, which is conductive to reducing the thickness of the battery module 100 in the first direction X, and reducing the occupied space.

In some embodiments, along the first direction X, the thickness of the buffer member 70 after being compressed is not less than the depth of the fifth concave portion 261.

In some embodiments, the battery module 100 includes a second component 101 and a plurality of conductive plates 102, and the plurality of conductive plates 102 are disposed on a side of the second component 101, the side being oriented back away from cell assembly 10. The plurality of conductive plates 102 are provided insulated from each other. Electrode terminals 112 of the plurality of battery cells 11 pass through the second component 101 and are connected to the plurality of conductive plates 102, such that the plurality of battery cells 11 are connected in series or in parallel.

In some embodiments, the second component 101 includes an insulating holder, and the conductive plates 102 are fixed to the insulating holder. For example, the conductive plates 102 and the second component 101 are integrally molded by an injection molding process.

In some embodiments, the second component 101 includes a circuit board.

In some embodiments, the second component 101 includes a plurality of through holes, and the electrode terminals 112 pass through the through holes and then are connected to the conductive plates 102.

Referring to FIG. 18, this application further provides a manufacturing method using the above-described battery module 100, the method including the following steps:
step 1: placing the first component 50 between two adjacent battery cells 11 and stacking the plurality of battery cells 11; and
step 2: inserting one end of the testing member 30 into the first opening 50a from the second side.

In some embodiments, step 1 specifically includes: placing the first component 50 between the battery cell housings 111 of two adjacent battery cells 11, and providing the plurality of battery cells 11 are stacked, such that the first opening 50a faces the second side of the cell assembly 10 as a whole.

In some embodiments, step 1 specifically includes: inserting the detection portion 31 and the first segment 321 of the testing member 30 into the first opening 50a from the second side.

In some embodiments, the above-described manufacturing direction further includes the step: applying the binder 60 to the first segment 321 of the testing member 30 before the testing member 30 is inserted into the first opening 50a, such that the first segment 321 is bonded to the battery cell housing 111 and/ or the first component 50 by the binder 60.

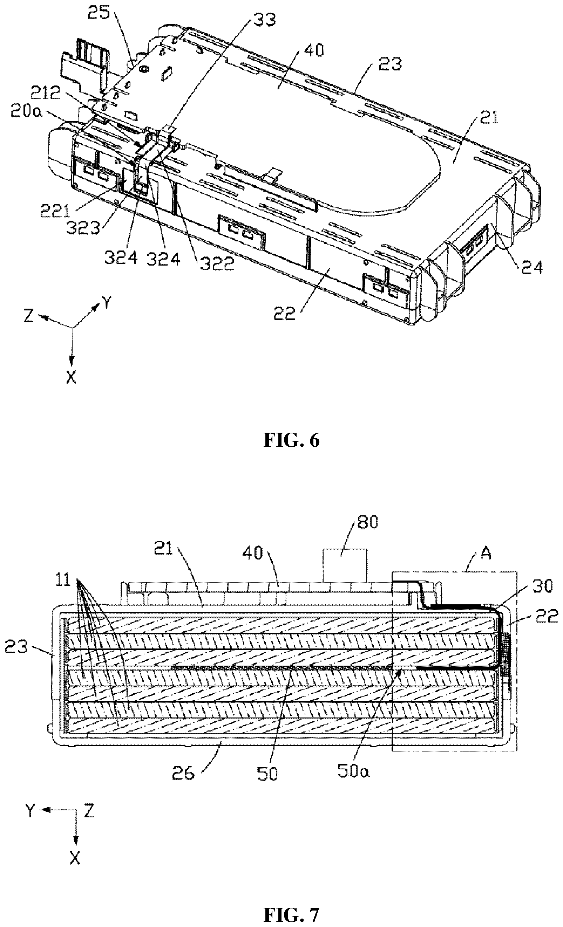

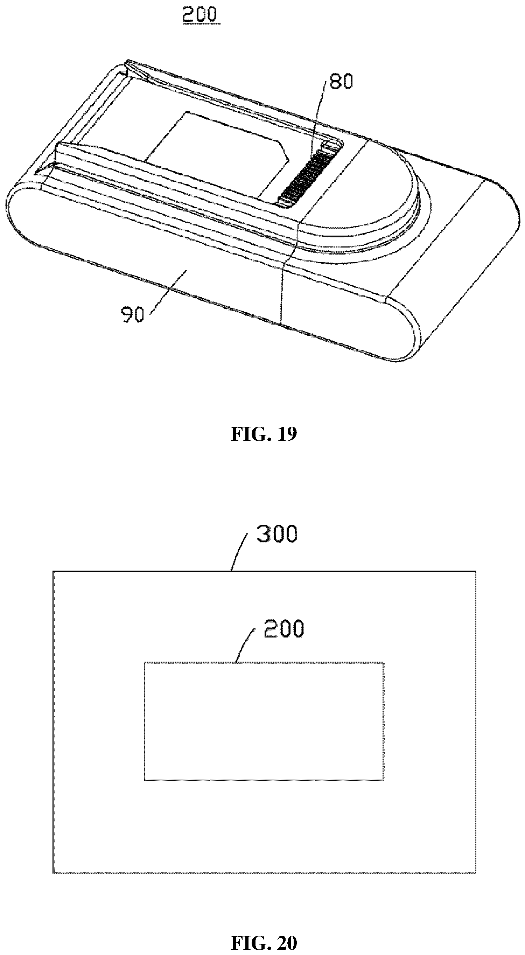

Referring to FIG. 6 and FIG. 19, this application further provides a battery pack 200 using the above-described battery module 100. The battery pack 200 further includes a circuit board 40, and the circuit board 40 is disposed on a side of the top wall 21, the side being oriented back away from the cell assembly 10. Another end of the testing member 30 is connected to the circuit board 40.

In some embodiments, the testing member 30 extends out of the holder 20 from the second opening 20a and is connected to a circuit board 40. The circuit board 40 is configured to receive electrical signals from the testing member 30.

Optionally, the circuit board 40 includes a battery management system (BMS) assembly, the BMS assembly includes a plurality of electronic components, and the plurality of electronic components realize functions such as controlling, protecting, communicating, calculating power, signaling, transmitting power, and so on, of the battery cell 11.

Optionally, the circuit board 40 includes a flexible printed circuit (FPC, Flexible Printed Circuit). Optionally, the circuit board 40 includes a printed circuit board (PCB, Printed Circuit Board), and a plurality of first wires (not shown) are disposed on the circuit board 40.

In some embodiments, the battery pack 200 further includes a connector 80, and the connector 80 is connected to the circuit board 40. The connector 80 is configured to be connected to an external device.

In some embodiments, the battery pack 200 includes a shell 90, and the battery module 100 is disposed in the shell 90.

Referring to FIG. 20, this application further provides an electrical device 300 using the above-described battery pack 200. The electrical device 300 is connected to a connector 80. In one implementation, the electrical device 300 of this application may be, but is not limited to, an electronic device, a drone, a backup power source, an electric vehicle, an electric motorcycle, an electric-assisted bicycle, an electric tool, a large battery module for home use, and the like.

A person of ordinary skill in the technical field should understand that some foregoing embodiments are merely intended to illustrate this application rather than to limit this application. Appropriate changes and variations on some foregoing embodiments shall fall within the scope of the disclosure of this application as long as they are within the scope of this application.

## Claims

1. A battery module (100), comprising:
a cell assembly (10) comprising a plurality of battery cells (11), each battery cell (11) comprising a battery cell housing (111) and electrode terminals (112), the electrode terminals (112) extend out the battery cell housing (111), and the electrode terminals (112) are located on a first side (1113) of the battery cell housing (111);
a testing member (30) comprising a detection portion (31), a first connecting portion (32), and a second connecting portion (33); the first connecting portion (32) connects the detection portion (31) to the second connecting portion (33), the detection portion (31) is disposed between the battery cell housings (111), and the second connecting portion (33) is configured to be connected to a circuit board (40); and
a first component (50) provided with a first opening (50a), at least a part of the detection portion (31) is located in the first opening (50a), and the first connecting portion (32) extends out of the first opening (50a) from a second side (1114) of the battery cell housing (111).

2. The battery module (100) according to claim 1, wherein the first opening (50a) faces a second side (1114) of the cell assembly (10).

3. The battery module (100) according to claim 1 or 2, wherein a thickness of the testing member (30) is less than a thickness of the first component (50).

4. The battery module (100) according to any one of claims 1 to 3, wherein the first opening (50a) penetrates through the first component (50) along a thickness direction of the first component (50).

5. The battery module (100) according to claim 4, wherein the first opening (50a) extends from a sidewall of the first component (50) along a width direction of the first component (50).

6. The battery module (100) according to any one of claims 1 to 5, wherein the battery module (100) further comprises a binder (60), and the testing member (30) is connected to the battery cell (11) via the binder (60).

7. The battery module (100) according to any one of claims 1 to 6, wherein the battery module (100) further comprises a holder (20), at least a part of the cell assembly (10) is disposed within the holder (20), the holder (20) is provided with a second opening (20a), the holder (20) comprises a top wall (21), and the top wall (21) and the cell assembly (10) are arranged along a first direction (X);
a part of the second opening (20a) penetrates through the top wall (21) along the first direction (X); and
a part of the first connecting portion (32) is exposed to the second opening (20a).

8. The battery module (100) according to claim 7, wherein the holder (20) comprises a front wall (22), the front wall (22) is connected to the top wall (21), and the front wall (22) and the cell assembly (10) are arranged along a second direction (Y);
a part of the second opening (20a) penetrates through the front wall (22) along the second direction (Y);
a part of the first connecting portion (32) is exposed to the second opening (20a); and
the first direction (X) is perpendicular to the second direction (Y).

9. The battery module (100) according to claim 8, wherein the first connecting portion (32) comprises a first segment (321), a second segment (322), a third segment (323) and a bent segment (324);
the first segment (321) is connected to the detection portion (31), the first segment (321) is connected to the third segment (323), the third segment (323) is connected to the second segment (322), and the second connecting portion (33) is connected to the second segment (322);
at least a part of the first segment (321) is disposed between two adjacent battery cell housings (111);
the second segment (322) and the first segment (321) are spaced apart along the first direction (X);
the third segment (323) is exposed to the first opening (50a) along the second direction (Y); and
the third segment (323) is connected to the first segment (321) and second segment (322) via the bent segment (324).

10. The battery module (100) according to claim 9, wherein a part of the bent segment (324) is exposed to the second opening (20a).

11. The battery module (100) according to claim 9, wherein the battery module (100) further comprises a second fixing portion (104), the front wall (22) is provided with a third concave portion (221), the second fixing portion (104) is disposed in the third concave portion (221), and a part of the third segment (323) is located between the battery cell housing (111) and the second fixing portion (104).

12. The battery module (100) according to claim 11, wherein the battery module (100) further comprises a resilient member (105), the resilient member (105) is disposed in the second opening (20a); along the second direction (Y), the resilient member (105) is located between the second fixing portion (104) and the first connecting portion (32); and the resilient member (105) is connected to the second fixing portion (104) and the first connecting portion (32).

13. The battery module (100) according to any one of claims 1 to 12, wherein the testing member (30) comprises a temperature sensor.

14. A battery pack (200), comprising the battery module (100) according to any one of claims 1 to 13 wherein the battery pack (200) further comprises a circuit board (40), the second connecting portion (33) is connected to the circuit board (40).

15. An electrical device (300), wherein the electrical device comprises the battery pack (200) according to claim 14.
